# EUROPÄISCHE PATENTANMELDUNG

(11) **EP 1 900 473 A1**
(43) Veröffentlichungstag der Anmeldung: **19.03.2008**
(21) Anmeldenummer: 06019412.3
(22) Anmeldetag: 15.09.2006
(51) Int. Cl.: B23P 15/00, F16C 9/04, F16C 7/02

(54) **Verfahren zur Herstellung eines Pleuels**

(71) Anmelder: ThyssenKrupp Automotive AG, 44793 Bochum (DE)
(72) Erfinder: Guerreiro, Sergio Stefano Dr.-Ing., 18017-550 Sorocaba-SP (BR)
(74) Vertreter: Adams, Steffen

(57) **Zusammenfassung**

Die Erfindung betrifft ein Verfahren zum Herstellen eines Lagerbauteils (1), insbesondere Pleuel (1), aus einem Formteil (2), wobei das Lagerbauteil (1) zumindest einen durch einen Lagerboden (3) und einen Lagerdeckel (4) gebildeten geteilten Lagersitz (5) umfasst und im Lagersitz (5) zur Lagerung einer Welle eine mit einer Lagerschicht (6) aus einem Lagerschichtmaterial beschichtete Lagersitzfläche (7) ausgebildet ist. Bei dem Verfahren der vorliegenden Erfindung wird der Lagerdeckel (4) von dem Formteil (2) entlang einer Trennfläche (8) abgetrennt. Erfindungsgemäss wird zur Bildung eines beschichtungsfreien Bereichs, ein Maskierungsmittel (M) während eines Beschichtungsvorgangs zum Aufbringen der Lagerschicht (6) derart senkrecht zu einer Trennungslinie (10) an der Lagersitzfläche (7) angeordnet, dass in der Lagerschicht (6) eine Ausnehmung (9) in einer vorgebbaren Breite (B) erzeugt wird. Die Erfindung betrifft ferner ein Lagerbauteil (1), bei welchem in der Lagerschicht (6) senkrecht zur Trennungslinie (10) ein beschichtungsfreier Bereich in Form einer Ausnehmung (9) vorgesehen ist.

## Beschreibung

Die Erfindung betrifft ein Verfahren zum Herstellen eines Lagerbauteils, insbesondere Pleuel, aus einem Formteil, sowie ein Lagerbauteil gemäss dem Oberbegriff des unabhängigen Anspruchs der jeweiligen Kategorie.

Solche Lagerbauteile sind beispielsweise als Pleuel mit einem kleinen Pleuelauge, einem Schaft und einem grossen Pleuelauge bekannt, wobei das grosse Pleuelauge in der Regel einen geteilten Lagersitz für die Lagerung des Pleuels an einer Kurbelwelle umfasst. Solche Pleuel werden in grossen Stückzahlen z.B. in Hubkolbenbrennkraftmaschinen für Personenkraftwagen und Lastkraftwagen, aber auch in Motoren für Schiffe oder in anderen Maschinen verbaut. Selbstverständlich können Pleuel auch in anderen Maschinen verwendet werden, in denen eine lineare Bewegung in eine Drehbewegung, oder umgekehrt, umgesetzt werden muss. Entsprechende Maschinen können z.B. Hubkolbenkompressoren, Pumpen, Webmaschinen und eine Vielzahl anderer Maschinen oder technischer Einrichtungen sein.

Auch wenn als bevorzugtes Anwendungsbeispiel im folgenden häufiger auf ein Pleuel Bezug genommen wird, versteht es sich von selbst, dass sich die Erfindung auch auf andere Lagerbauteile bezieht, die als wesentliches Merkmal einen geteilten Lagersitz haben.

Ein Pleuel oder ähnliche Lagerbauteile werden im allgemeinen dadurch hergestellt, dass zunächst ein Formteil durch Schmieden, Giessen oder ein pulvermetallurgisches Verfahren bereitgestellt wird, wobei ein Innenmass des grossen Pleuelauges im Bereich einer zukünftigen Trennstelle, an der das grosse Pleuelauge zur Bildung eines geteilten Lagesitzes in einem späteren Verfahrenschritt an einer Trennfläche getrennt wird, bevorzugt ein Aufmass aufweist.

Die Trennung zur Bildung des geteilten Lagersitzes kann z.B. durch Sägen erfolgen, wodurch das Aufmass wieder weitgehend beseitigt wird. Die Trennflächen der so gebildeten Pleuelkappe, bzw. Lagerdeckels einerseits und des restlichen Pleuels andererseits werden in einem weiteren Verfahrensschritt passgenau, z.B. durch Schleifen bearbeitet. Die Pleuelkappe wird in fertigem Zustand in der Regel mittels Pleuelschrauben an dem restlichen Pleuel befestigt, wobei die dazu erforderlichen Schraubenlöcher vor oder nach der Trennung gebohrt werden können. In zusammengesetztem Zustand des Pleuels erfolgt anschliessend eine mechanische Bearbeitung des Lagersitzes zur Aufnahme von Lagerschalen, die zwischen Pleuel und Kurbelwelle unter Bildung eines Gleitlagers angeordnet werden.

Die mechanische Bearbeitung des Lagersitzes umfasst meist eine Grob-, eine Fein- und eine Feinstbearbeitung durch Drehen, Feindrehen bzw. Honen. Ausserdem müssen im Lagersitz des Pleuelauges Ausnehmungen vorgesehen werden, die mit entsprechenden Nasen der Lagerschalenhälften zusammenwirken, so dass ein Verdrehen der Lagerschalen im Betriebszustand verhindert wird.

Die beiden Lagerschalenhälften müssen dabei mit höchster Präzision bearbeitet werden, da zum einen die Innenflächen der Lagerschalenhälften zusammen mit der Kurbelwelle das Gleitlager mit einer dazu erforderlichen Gleitlagerpassung bilden, und andererseits die äusseren Oberflächen der Lagerschalen dem Lagersitz des grossen Pleuelauges des Pleuels angepasst werden müssen. Um einen sicheren Sitz der Lagerschalenhälften zu gewährleisten, ist es erforderlich, dass die Lagerschalenhälften zwischen der Pleuelkappe, d.h. dem Lagerdeckel und dem restlichen Pleuel eingeklemmt werden. Dadurch kann nicht ausgeschlossen werden, dass beim Verschrauben der Pleuelkappe Verspannungen entstehen, die Verformungen verursachen können, die zu Passungenauigkeiten führen.

Jedoch auch bei hoch präziser Bearbeitung kann nicht immer verhindert werden, dass sich bei grossen Belastungen im Betriebszustand die Pleuelkappe verschiebt und somit eine einwandfreier Sitz der Lagerschalenhälften nicht mehr gewährleistet ist.

All diese Probleme, die durch die Verwendung von Lagerschalen auftreten, abgesehen davon, dass die Konstruktion mit Lagerschalen aufwendig und wartungsintensiv ist, vor allem weil die Lagerschalen nur eine begrenzte Lebensdauer haben, sind bereits frühzeitig erkannt worden, und im Stand der Technik werden verschiedene Massnahmen vorgeschlagen, um diese Probleme zumindest teilweise zu vermeiden.

So ist aus der DE 38 06 236 ein Pleuel bekannt, dessen Pleuelkappe durch Bruchtrennung vom restlichen Pleuel getrennt wird, das heisst, die Pleuelkappe, also der Lagerdeckel wird nicht durch Sägen abgetrennt.

Durch die Bruchtrennung wird eine Trennfläche mit grosser unregelmässiger und rauer Oberfläche erzeugt, so dass ein seitlicher Versatz der Pleuelkappe vom restlichen Pleuel im wesentlichen ausgeschlossen ist.

Ein weiterer positiver Effekt ist, dass die Trennfläche durch die Bruchtrennung eine einzigartige Bruchoberfläche erhält, so dass Verwechselungen von Einzelteilen bei Montage- oder Reparaturarbeiten am Pleuel ebenfalls ausgeschlossen sind.

Allerdings müssen auch diese Pleuel immer noch mit Lagerschalen ausgestattet werden, so dass zwar das Problem einer Verschiebung der Pleuelkappe gegen den Rest des Pleuels einigermassen gut gelöst ist, jedoch bleiben alle oben im Detail beschriebenen Nachteile der Lagerschalen weiter bestehen.

Zur Lösung dieser Problematik schlägt die EP 0 635 104 vor, ganz auf die Lagerschalen im Lagersitz zu verzichten und stattdessen die Lagersitzfläche mit einer thermischen Spritzschicht, also mit einer Oberflächenschicht als Lagerschicht zu versehen. Die Pleuelkappe wird dabei ebenfalls durch Bruchtrennung vom Rest des Pleuels getrennt, so dass auch hier ein sicherer Sitz der Pleuelkappe auf dem Rest des Pleuels gewährleistet ist.

Ein zentraler Punkt gemäss EP 0 635 104 ist dabei, dass die Lagerschicht ebenfalls durch Bruchtrennung geteilt wird, so dass auch die Lagerschichten der beiden Lagerteile, also die Lagerschicht auf dem Lagerdeckel und die Lagerschicht auf dem Lagerboden, der am Rest des Pleuels zur Bildung des Lagersitzes den Gegenpart zum Lagerdeckel, also zur Pleuelkappe bildet, einzigartig und unverwechselbar zusammenpassen.

Es hat sich allerdings gezeigt, dass durch die Bruchtrennung der Lagerschicht tatsächlich mehr Probleme entstehen, als durch diese Massnahme gelöst werden. Bei der Bruchtrennung der Lagerschicht können in dieser, abhängig vom Material aus dem die Lagerschicht besteht, der Dicke der Schicht usw., unerwünschte Spannungen, z.B. durch plastische Verformungen entstehen, je nach Material oder der Stärke der induzierten Spannungen im Beschichtungswerkstoff können in gravierenden Fällen sogar Risse in der Lagerschicht entstehen, oder die Haftung der Lagerschicht auf der Lagersitzfläche verschlechtert sich, wobei die Lagerschicht sich, vor allem unmittelbar in der Nähe der Bruchstelle, sogar von der Lagersitzfläche ablösen kann. Darüber hinaus können Ausbrüche am inneren Rand der Lagerschicht im Bereich der Bruchstelle entstehen, so dass die Lauffläche, auf der z.B. eine Kurbelwelle gelagert ist und auf der eine Oberfläche der Kurbelwelle im Betriebszustand in gelagerter Weise läuft, Beschädigungen aufweist, die zur Verschlechterung der Lagerung, insbesondere der Schmierung führen kann, so dass im schlimmsten Fall ein Lagerschaden befürchtet werden muss, der weitere gravierende Schäden an dem entsprechenden Motor zur Folge haben kann.

Die Aufgabe der Erfindung ist es daher, ein verbessertes Verfahren zum Herstellen eines Lagerbauteils, insbesondere eines Pleuels zur Verfügung zu stellen, dessen Lagersitzflächen mittels einer Oberflächenbeschichtung in Form einer Lagerschicht beschichtet wird, so dass auf die nachteiligen Lagerschalen verzichtet werden kann, wobei jedoch die aus dem Stand der Technik bekannten schädlichen Wirkungen auf die Lagerschicht, die z.B. durch die Bruchtrennung hervorgerufen werden, vermieden werden können.

Eine weitere Aufgabe der Erfindung ist es, ein entsprechend verbessertes Lagerbauteil zur Verfügung zu stellen.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Verfahren zum Herstellen eines Lagerbauteils, insbesondere Pleuel, aus einem Formteil, wobei das Lagerbauteil zumindest einen durch einen Lagerboden und einen Lagerdeckel gebildeten geteilten Lagersitz umfasst und im Lagersitz zur Lagerung einer Welle eine mit einer Lagerschicht aus einem Lagerschichtmaterial beschichtete Lagersitzfläche ausgebildet ist. Bei dem Verfahren der vorliegenden Erfindung wird der Lagerdeckel von dem Formteil entlang einer Trennfläche abgetrennt. Erfindungsgemäss wird zur Bildung eines beschichtungsfreien Bereichs ein Maskierungsmittel während eines Beschichtungsvorgangs zum Aufbringen der Lagerschicht derart senkrecht zu einer Trennungslinie an der Lagersitzfläche angeordnet, dass in der Lagerschicht eine Ausnehmung in einer vorgebbaren Breite erzeugt wird.

Wesentlich für die Erfindung ist es folglich, dass die Lagerschicht, die zum Beispiel eine mittels Plasmaspritzen auf die Lagersitzfläche aufgebrachte thermische Spritzschicht sein kann, nicht durch Bruchtrennung im Bereich der Trennfläche getrennt wird. Das wird dadurch erreicht, dass während der Beschichtung der Lagersitzfläche in einem Bereich senkrecht zur Trennungslinie ein Maskierungsmittel an der Lagersitzfläche derart angeordnet wird, dass in der Lagerschicht eine Ausnehmung, bevorzugt eine streifenförmigen Ausnehmung über die gesamte Breite des Lagerbauteils, also zum Beispiel über die gesamte Dicke des Pleuelauges beim Beschichtungsvorgang erzeugt wird, so dass in dem Bereich, in dem der Lagerdeckel vom Rest des Lagerbauteils an einer Trennfläche, z.B. durch Bruchtrennung oder eine andere Trennungsmethode getrennt wird, keine Oberflächenbeschichtung in Form der Lagerschicht vorliegt, so dass die Lagerschicht, die ansonsten den Rest der Lagersitzfläche bedeckt, durch die Trennung des Lagerdeckels vom Rest des Lagerbauteils, d.h. vom Lagerboden, in keiner Weise negativ beeinflusst wird.

Erfindungsgemäss wird somit eine nicht zusammenhängende Lagerschicht erzeugt, in dem im Bereich z.B. einer Sollbruchstelle eine Maskierung während der Beschichtungsphase aufgebracht wird, durch die lokal das Aufbringen der Beschichtung auf die Oberfläche des Pleuelauges verhindert wird.

Somit steht erstmals ein Verfahren zur Herstellung eines Lagerbauteils bereit, das die Fertigung, z.B. eines Pleuels, mit einer Lagerschicht auf der Lagersitzfläche gestattet, so dass einerseits auf Lagerschalen verzichtet werden kann, sich selbst bei grossen Belastungen im Betriebszustand die Pleuelkappe nicht verschiebt und somit eine einwandfreier Sitz der Lagerhälften sicher gewährleistet ist, weil das Lagerbauteil selbst entlang einer Trennfläche, bevorzugt mittels Bruchtrennung, getrennt wird, und andererseits die schädlichen Wirkungen auf die Lagerschicht durch die Abtrennung des Lagerdeckels vom Lagerboden, also durch die Abtrennung des Lagerdeckels vom Rest des Lagerbauteils, vermieden werden.

In einem bevorzugten Ausführungsbeispiel eines erfindungsgemässen Verfahrens wird das Maskierungsmittel in Form einer Maskierungsstange, insbesondere in Form einer Maskierungsstange mit einem runden, oder einem ovalen, oder einem mehreckigen Querschnitt, insbesondere mit einem rechteckigen oder quadratischen Querschnitt ausgebildet, wobei zur Beschichtung, insbesondere im industriellen Massstab, mindestens zwei Lagerbauteile, bevorzugt zehn oder mehr Lagerbauteile in Form eines Stapels auf einer Halterung angeordnet werden und / oder das Maskierungsmittel in der Halterung verankert wird.

Das heisst, vor allem in der industriellen Fertigung, wo hohe Stückzahlen von Lagerbauteilen möglichst effizient und kostengünstig hergestellt werden müssen, werden zur Beschichtung gleich mehrere Lagerbauteile in Form eines Stapels auf einer Halterung angeordnet und können so z.B. gleichzeitig beschichtet werden, wobei die Halterung zum Beispiel zwei Maskierungsstangen umfasst, die derart an der Lagersitzfläche angeordnet werden, dass senkrecht zur Trennungslinie bei jedem Lagerbauteil zwei Ausnehmungen beim Beschichtungsvorgang entstehen, so dass bei einer anschliessenden Bruchtrennung die Trennflächen nicht durch die Lagerschicht verlaufen und daher die Lagerschicht durch die Bruchtrennung auch nicht negativ beeinflusst wird.

Es versteht sich, dass in ganz speziellen Fällen als Maskierungsmittel auch ein festes und / oder ein flüssiges und / oder ein gelartiges Material senkrecht zur Trennlinie an der Lagersitzfläche vor Beginn des Beschichtungsvorgangs vorgesehen werden kann, so dass während des Beschichtungsvorgangs ein Anhaften der Lagerschicht auf der Lagersitzfläche im Bereich der zu bildenden Ausnehmung verhindert wird.

Nach dem Beschichten der Lagersitzfläche mit der Lagerschicht wird das Maskierungsmittel entfernt, und / oder die Lagerschicht wird bevorzugt an einem Rand der Ausnehmung nachbearbeitet, um eventuelle Bruchkanten, die durch das Entfernen des Maskierungsmittels in einem Randbereich der Ausnehmung an der Lagerschicht entstehen können, zu beseitigen, zu glätten bzw. zu begradigen.

Wie bereits erwähnt, erfolgt die Abtrennung des Lagerdeckels vom Formteil bevorzugt durch Bruchtrennung. Es soll jedoch ausdrücklich darauf hingewiesen werden, dass die Abtrennung in speziellen Fällen, z.B. wenn ein sicherer Sitz des Lagerdeckels auf dem Lagerboden aufgrund anderer technischer Massnahmen oder Umstände gewährleistet ist, auch durch andere Methoden, z.B. durch Sägen erfolgen kann. Auch in solchen Fällen hat sich das erfindungsgemässe Verfahren als deutlich überlegen herausgestellt, weil auch beim Durchsägen der Lagerschicht diese erheblichen mechanischen Belastungen ausgesetzt wird, die ebenfalls zu den oben beschriebenen Beschädigungen der Lagerschicht führen können.

Das Formteil wird bevorzugt in der Ausnehmung zur Bildung der Trennfläche mit einer Anrisskerbe versehen. Die Anrisskerbe kann z.B. mittels eines thermochemischen Verfahrens, also z.B. mit einem Energiestrahl, wie einem Laserstrahl oder einem Elektronenstrahl, oder auch mittels eines mechanischen Verfahrens, z.B. mittels einem Fluidstrahl, bevorzugt mit einem Wasserstrahl oder einer mechanischen Kerbvorrichtung oder in speziellen Fällen sogar durch das Maskierungsmittel selbst, das z.B. zur Bildung der Anrisskerbe über ein Kerbmittel, z.B. über eine Schneide verfügen kann, in die Lagersitzfläche im Bereich der Trennungslinie eingebracht werden. Dadurch wird die zu bildende Trennfläche in Form einer Sollbruchstelle gekennzeichnet, so dass z.B. bei einer anschliessenden Bruchtrennung eine präzise und saubere Trennfläche erreicht wird.

Dabei ist es in ganz speziellen Fällen möglich, dass der Lagerdeckel vor der Beschichtung der Lagersitzfläche mit der Lagerschicht getrennt wird. D.h., vor der Beschichtung der Lagersitzfläche mit der Lagerschicht wird der Lagerdeckel vom Formteil abgetrennt, insbesondere durch Bruchtrennung abgetrennt, und anschliessend wieder lösbar zusammengesetzt. Dann erst erfolgt die Beschichtung der Lagersitzfläche mit der Lagerschicht, wobei zur Bildung der Ausnehmung selbstverständlich auch in diesen Fällen das Maskierungsmittel während des Beschichtungsvorgangs wie oben beschrieben verwendet wird.

Bevorzugt wird die Lagerschicht durch ein thermisches Spritzverfahren, insbesondere mittels Flammspritzen, Hochgeschwindigkeitsflammspritzen, Plasmaspritzen, oder ein anderes, aus dem Stand der Technik wohlbekanntes thermisches Spritzverfahren, oder durch ein galvanisches Verfahren oder mittels eines anderen geeigneten Beschichtungsverfahrens aufgebracht.

Das Formteil selbst, aus dem das Lagerbauteil gebildet wird, wird in an sich bekannter Weise durch Giessen oder Schmieden oder pulvermetallurgische Verfahren, insbesondere durch Sintern oder Sinterschmieden hergestellt.

Die Lagerschicht selbst kann z.B. als Gleitschicht, insbesondere als Gleitschicht mit guten Trocken- und / oder Nassgleiteigenschaften als Gleitlagerschicht ausgebildet werden.

Die Erfindung betrifft weiterhin ein Lagerbauteil, insbesondere Pleuel, hergestellt aus einem Formteil, wobei das Lagerbauteil zumindest einen durch einen Lagerboden und einen Lagerdeckel gebildeten, an einer Trennfläche geteilten Lagersitz umfasst, und im Lagersitz zur Lagerung einer Welle eine mit einer Lagerschicht aus einem Lagerschichtmaterial beschichtete Lagersitzfläche ausgebildet ist. Erfindungsgemäss ist in der Lagerschicht zur Bildung eines beschichtungsfreien Bereichs senkrecht zu einer Trennungslinie, eine Ausnehmung in einer vorgebbaren Breite vorgesehen, wie oben bereits ausführlich bei der Diskussion des erfindungsgemässen Verfahrens ausführlich beschrieben.

In einem für die Praxis sehr wichtigen Ausführungsbeispiel ist das Lagerbauteil als Pleuel mit einem geteilten Pleuelkopf ausgebildet.

Im folgenden wird die Erfindung an Hand der schematischen Zeichnung näher erläutert. Es zeigen:
- Fig. 1: ein nach dem erfindungsgemässen Verfahren hergestelltes Pleuel;
- Fig. 2: eine perspektivische Darstellung der Ausnehmung im Pleuelauge des Pleuels gemäss Fig. 1;
- Fig. 3: einen Schnitt entlang der Schnittlinie 1-1 gemäss Fig. 2 vor der Bruchtrennung;
- Fig. 4: der Ausschnitt des Pleuels gemäss Fig. 3 im Betriebszustand;
- Fig. 5: einen Stapel von Lagerbauteilen während eines Beschichtungsvorgangs durch thermisches Spritzen.
- Fig. 6: eine um 90° gedrehte Darstellung des Stapels der Fig. 5 mit Maskierungsstangen;
- Fig. 7: einen Schnitt entlang der Schnittlinie II-II gemäss Fig. 6.

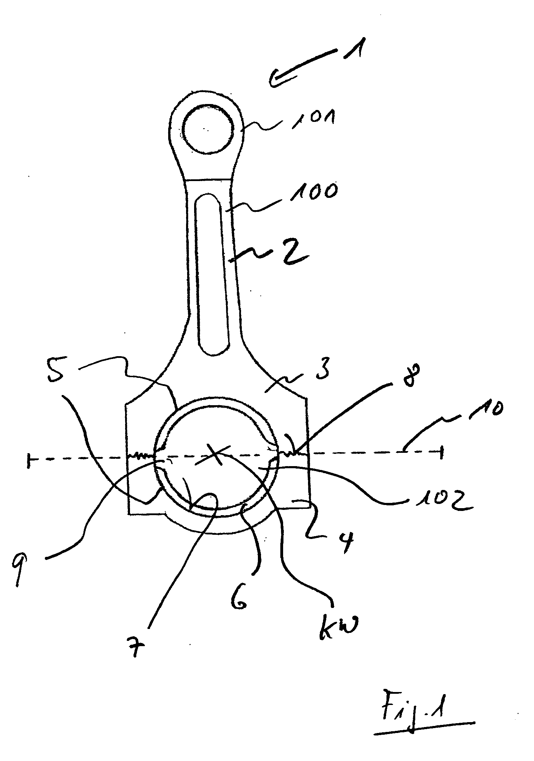

In Fig. 1 ist schematisch ein nach dem erfindungsgemässen Verfahren hergestelltes Pleuel dargestellt, das im folgenden gesamthaft mit dem Bezugszeichen 1 bezeichnet wird.

Das Pleuel der Fig. 1 wurde zum Beispiel in einem Sinter oder Schmiedeverfahren aus einem Formteil 2 hergestellt. Das Pleuel 1 umfasst einen Lagerboden 3, der über einen Pleuelschaft 100 in an sich bekannter Weise mit einem kleinen Pleuelauge 101 verbunden ist. Zusammen mit dem Lagerdeckel 4 bildet der Lageboden 3 einen geteilten Lagersitz 5, wobei im Lagersitz 5 zur Lagerung einer Kurbelwelle KW eine mit einer Lagerschicht 6 aus einem Lagerschichtmaterial beschichtete Lagersitzfläche 7 ausgebildet ist.

Der geteilte Lagersitz 5 ist an einer Trennfläche 8 durch Bruchtrennung getrennt worden. Der Lagerdeckel 4 ist dabei im Einbauzustand an den Lagerboden 3, also an den Rest des Pleuels 1 z.B. mittels Pleuelschrauben verschraubt, die aus Gründen der Übersicht in Fig. 1 nicht dargestellt sind.

Deutlich zu erkennen ist die Ausnehmung 9, die sich senkrecht zur Trennungslinie 10 über die gesamte Dicke D des Pleuels 1, also in Richtung einer Achse der Kurbelwelle KW in Form eines beschichtungsfreien Streifens erstreckt. Erfindungsgemäss wurde die Ausnehmung 9 vor der Bruchtrennung des grossen Pleuelauges 102, das durch den Lagerboden 3 und den Lagerdeckel 4 gebildet wird, bereits während der Beschichtung der Lagersitzfläche 7 mit der Lagerschicht 6 durch Verwendung des Markierungsmittels M erzeugt. Dazu wird das Markierungsmittel M während des Beschichtungsvorgangs zum Aufbringen der Lagerschicht 6 derart senkrecht zu der Trennungslinie 10 an der Lagersitzfläche 7 angeordnet, dass in der Lagerschicht 6 die beschichtungsfreie Ausnehmung 9 in Form eines Streifens der Breite B entsteht. Dadurch weist die Lagerschicht 6 durch den späteren Vorgang der Bruchtrennung keinerlei Schäden auf. Insbesondere weist die Lagerschicht 6 keinerlei, durch die Bruchtrennung verursachte innere Spannungen auf, haftet überall optimal auf der Lagersitzfläche 7, und auch die Oberfläche der Lagerschicht 6, die für den korrespondierenden Kurbelwellenabschnitt eine Lauffläche bildet, befindet sich ohne irgendwelche Schäden, wie sie aus dem Stand der Technik bekannt sind, in jeder Hinsicht in einwandfreiem Zustand. D.h., dadurch dass die Ausnehmung 9 vor der Bruchtrennung bereits während des Beschichtungsvorgangs erzeugt wurde, sind beim anschliessenden Abtrennen des Lagerdeckels 4 vom Lagerboden 3 keinerlei schädliche Wirkungen, wie innere Spannungen, plastische oder nicht plastische Verformungen, Ausbrüche an den inneren Rändern der Lageschicht usw. verursacht worden.

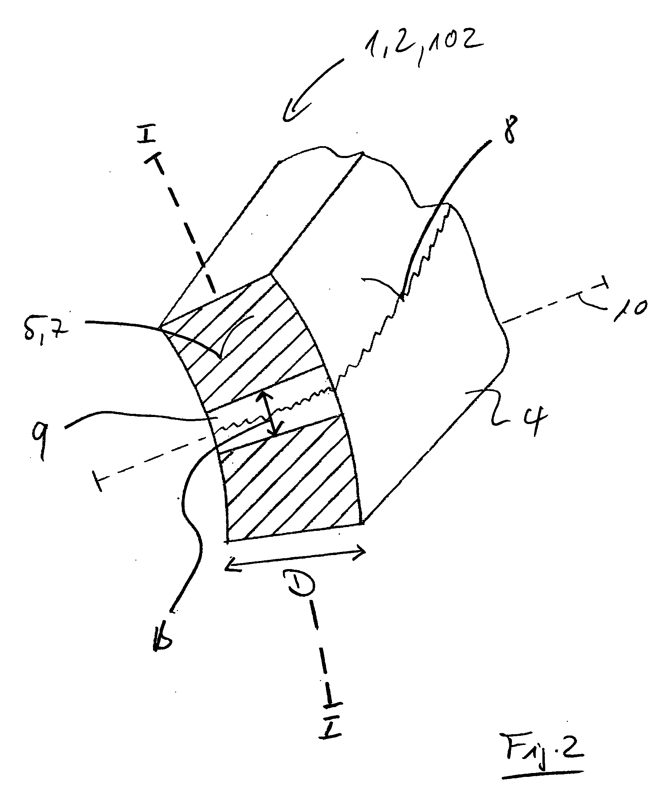

In Fig. 2 ist eine perspektivische Darstellung der Ausnehmung im grossen Pleuelauge 102 des Pleuels 1 gemäss Fig. 1 zur Verdeutlichung nochmals ausschnittsweise im Detail gezeigt.

Der Lagerdeckel 4 wurde, nachdem die Ausnehmung 9 mit einer Breite B, die zum Beispiel zwischen 1 mm und 3 mm, im Speziellen 2 mm breit sein kann und sich senkrecht zur Trennungslinie 10 über die Dicke D des Pleuelauges 102 erstreckt, während des Beschichtungsvorgangs durch Verwendung des Markierungsmittels M erzeugt wurde, entlang der Trennfläche 8 abgetrennt und wieder zusammen gesetzt. Es ist gut zu erkennen, dass durch die Bruchtrennung eine Trennfläche 8 mit einzigartiger unregelmässiger Struktur entstanden ist, so dass der Lagerdeckel 4 und der Lagerboden 3 in einzigartiger Weise zusammenpassen, wodurch einerseits ein sicher Sitz des Lagerdeckels 4 auf dem Rest des Pleuels 1 gewährleistet ist, und zum anderen die Teile beim Zusammenbau nicht verwechselt werden können.

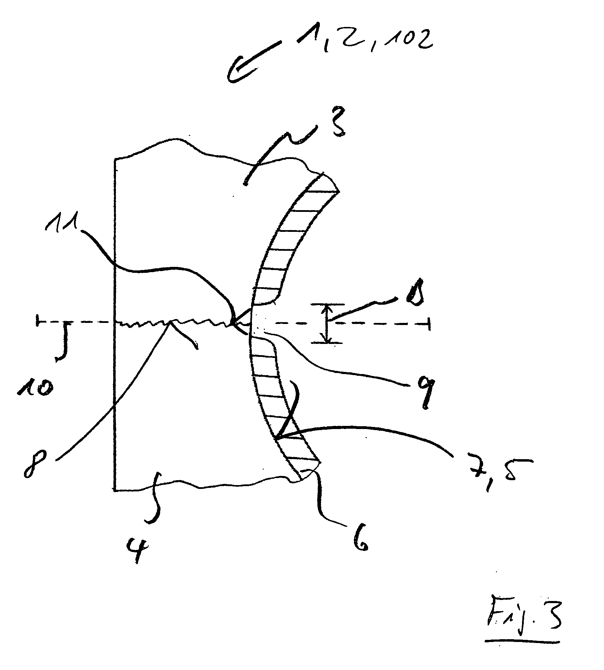

Fig. 3 zeigt einen Schnitt entlang der Schnittlinie I-I gemäss Fig. 2 vor der Bruchtrennung. Lagerdeckel 4 und Lagerboden 3 bilden somit noch eine Einheit, die vermutlich bei einer späteren Bruchtrennung zu erwartende Trennfläche 8 ist schematisch bereits vorskizziert. Die Lagersitzfläche 7 ist mit der Lageschicht 6 beschichtet, wobei durch Verwendung des Markierungsmittels M während der Beschichtung der Lagersitzfläche 7 mit der Lagerschicht 6 die Ausnehmung 9 der Breite B in der Lageschicht 6 in Form eines beschichtungsfreien Bereichs, senkrecht zur Trennungslinie 10 erzeugt wurde. In der Ausnehmung 9 ist eine Anrisskerbe 11 vorgesehen, die die spätere Bruchtrennung erleichtern soll, indem sie eine Sollbruchstelle zur Bildung der Trennfläche 8 definiert.

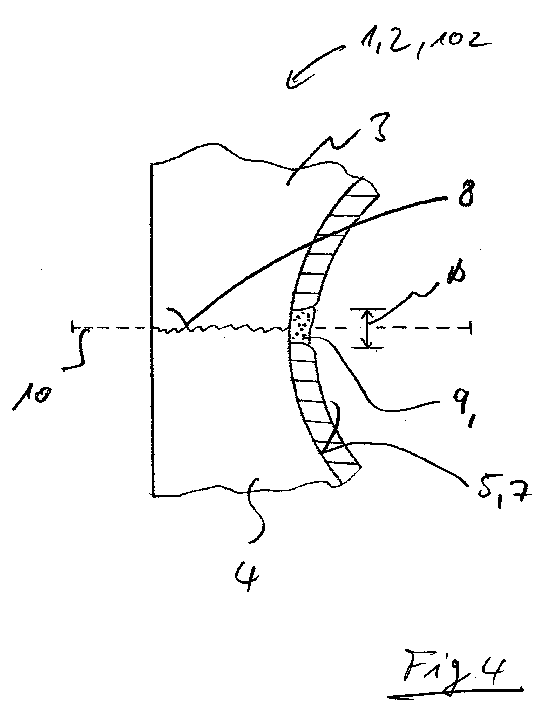

In Fig. 4 ist schliesslich schematisch der Ausschnitt des Pleuels 1 gemäss Fig. 3 im Betriebszustand dargestellt. Der Pleuel 1 befindet sich im Einbauzustand und lagert eine in Fig. 4 aus Übersichtgründen nicht genauer dargestellte Kurbelwelle KW.

In der Ausnehmung 9 der Breite B hat sich ein Gemisch aus Schmieröl und Verschmutzungen angesammelt, das im Betrieb z.B. aus Öl und Abrieb, insbesondere aus Metallabrieb entstanden ist. Der Abrieb wird vom Schmieröl aufgenommen und in die Ausnehmungen 9 transportiert.

Anhand der Fig. 4 wird somit ein weiterer wichtiger Vorteil der Ausnehmung 9 in der Lageschicht 6 sehr deutlich. Die Ausnehmung 9 dient nämlich einerseits als Öltasche, in der eine bestimmte Menge an Schmieröl gespeichert werden kann, so dass die Schmierung zischen Lagerschicht 6 und gelagerter Kurbelwelle KW verbessert wird. Andererseits, da das Schmieröl, das in der Ausnehmung 9 gespeichert ist, die im Betrieb entstandenen Verschmutzungen und Abriebteilchen aufnimmt, sind diese dem Ölfilm, der zwischen Lagerschicht 6 und Kurbelwelle KW als Schmierfilm dient, entzogen, so dass die Schmierwirkung des Ölfilms deutlich verbessert wird.

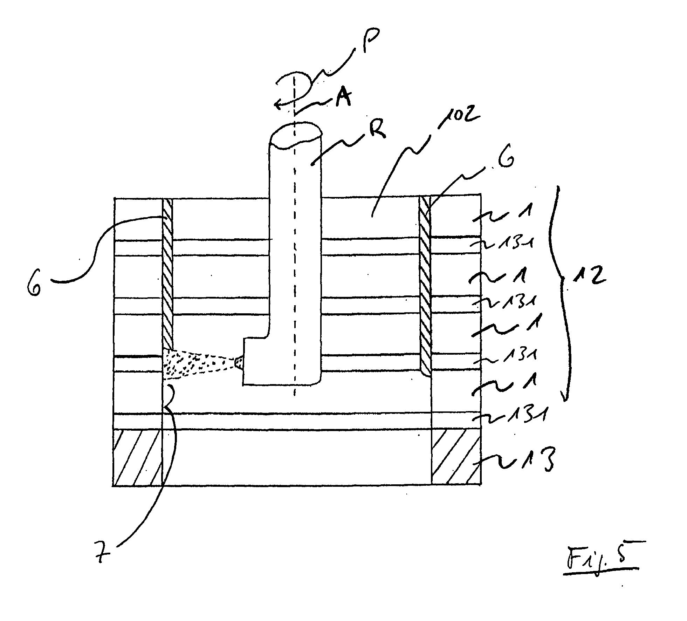

Anhand der Fig. 5 bis 7 soll schliesslich schematisch ein bevorzugtes Verfahren bzw. eine Vorrichtung zur Beschichtung eines Lagerbauteils 1 gemäss einem erfindungsgemässen Verfahren demonstriert werden.

Im Beispiel der Fig. 5 sind insgesamt vier Lagerbauteile 1, z.B. vier Pleuel 1 derart auf einer Halterung 13 übereinander in Form eines Stapels 12 gestapelt, dass alle Lagersitzflächen 7 aller vier Lagerbauteile 1 gleichzeitig mittels der rotierenden Plasmaspritzvorrichtung R, die als solche aus dem Stand der Technik bekannt ist, beschichtet werden können.

Die Plasmaspritzvorrichtung R rotiert dabei während des Beschichtungsvorgangs um die Achse A, wie durch den Pfeil P angedeutet, und wird dabei darstellungsgemäss in senkrechter Richtung entlang der Achse A geführt, so dass nacheinander alle Lagersitzflächen 7 in allen grossen Pleuelaugen 102 aller Lagerbauteile 1 mit einer Lagerschicht 6 durch thermisches Plasmaspritzen beschichtet werden können.

Dabei sind jeweils ein Maskierungsmittel M, das im vorliegenden Beispiel eine Maskierungsstangen M ist, an jeweils zwei gegenüberliegenden Zonen der Lagersitzflächen vorgesehen, in welchen Zonen zur Bildung von zwei gegenüberliegenden Ausnehmungen 9 je ein beschichtungsfreier Streifen entstehen soll. In der Schnittdarstellung der Fig. 5 sind die Maskierungsstangen M nicht zu sehen, da sie sich an zwei senkrecht zur Zeichenebene befindlichen Zonen der Lagersitzflächen 7 befinden.

Damit nach Beendigung des Beschichtungsvorgangs die Lagerteile 4 ohne Schaden wieder sauber getrennt werden können, ist zwischen jeweils zwei Lagerbauteilen 1 noch eine Zwischenscheibe 131, die z.B. eine Dicke von ca. 2 mm haben kann, vorgesehen.

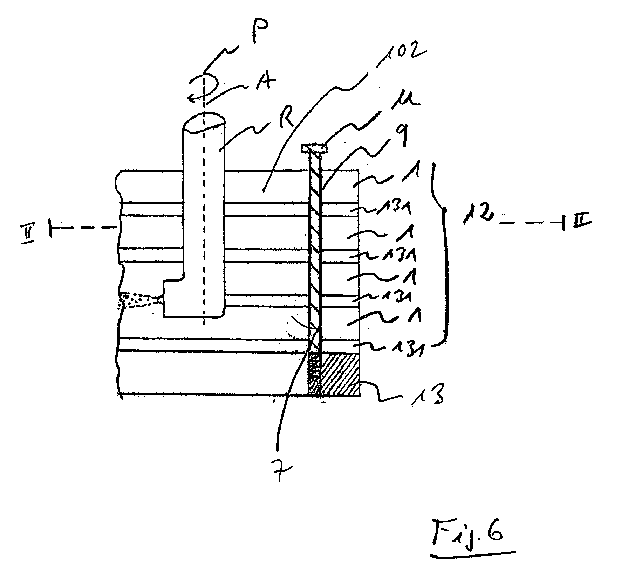

In Fig. 6 ist eine um die Achse A um 90° gedrehte Darstellung des Stapels 12 der Fig. 5 dargestellt, so dass hier auch die Maskierungsstangen M zu erkennen sind. Aus Gründen der Übersicht ist nur die darstellungsgemäss rechte Seite des Stapels 12 gezeigt. Wie bereits erwähnt, sind jeweils eine Maskierungsstange M an zwei gegenüberliegenden Zonen der Lagersitzflächen vorgesehen, in welchen Zonen zur Bildung von zwei gegenüberliegenden Ausnehmungen 9 je ein beschichtungsfreier Streifen entstehen soll.

Wie der Fig. 6 deutlich zu entnehmen ist, maskiert die Maskierungsstange M in allen vier grossen Pleuelaugen 102 gleichzeitig jeweils einen Streifen der Breite B, so dass kein Beschichtungsmaterial, dass von der rotierenden Plasmaspritzvorrichtung R auf die Lagersitzfläche aufgespritzt wird, im Bereich dieses Streifens auf die Lagersitzfläche 7 gelangen kann, so dass automatisch die beschichtungsfreie Ausnehmung 9 gebildet wird.

Die Maskierungsstangen M sind dabei in der Halterung 13 mittels einer Schraubverbindung fest verankert, so dass sie überall im Stapel 12 derart an den Lagersitzflächen 7 anliegen, dass im Bereich der Maskierungsstangen M kein Beschichtungsmaterial auf die Lagersitzflächen 7 aufgebracht wird.

Der Fachmann versteht dabei, dass die Maskierungsstangen natürlich auch auf jede andere geeignete Weise zur Maskierung des zu bildenden beschichtungsfreien Bereichs auf der Lagersitzfläche fixiert sein können. Insbesondere um die Stabilität zu erhöhen, können die Maskierungsstangen M auch beispielsweise zusätzlich noch am oberen Ende des Stapels oder z.B. jeweils in einer Bohrung der Zwischenscheiben 131 oder durch andere dem Fachmann bekannte Massnahmen gehaltert sein.

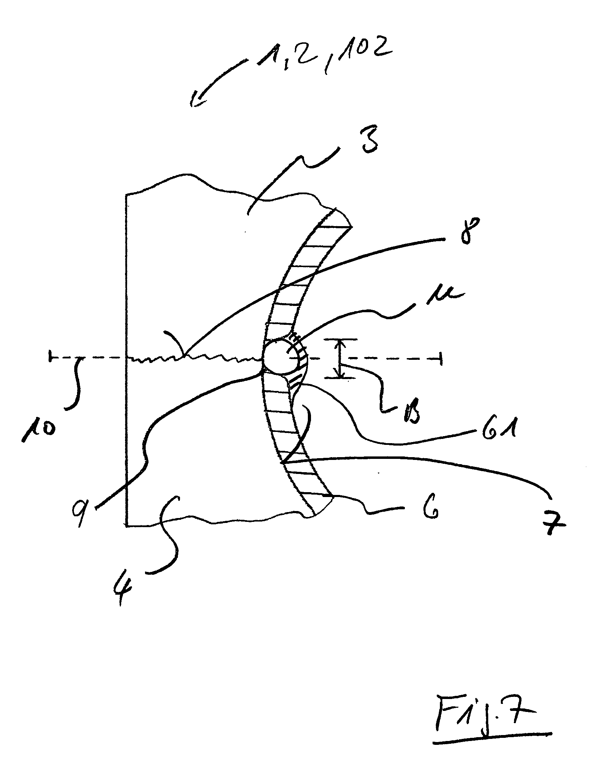

Fig. 7 zeigt schliesslich einen Schnitt entlang der Schnittlinie II-II gemäss Fig. 6. Das grosse Pleuelauge, das sich gemäss Fig. 6 noch im Stapel 12 befindet, und zwar in einem Bereich, der bereits durch die rotierende Plasmaspritzvorrichtung R beschichtet wurde, ist selbstverständlich noch nicht durch Bruchtrennung getrennt worden. Es ist lediglich der zur erwartende Verlauf der Trennfläche 8 skizziert, die bei einer späteren Bruchtrennung des Lagerdeckels 4 vom Lagerboden 3 entstehen wird.

Deutlich zu erkennen ist, wie die Maskierungsstange M einen Bereich der Breite B während des vorgegangenen Beschichtungsvorgangs maskiert hat, so dass ein beschichtungsfreier Bereich auf der Lagersitzfläche 7 in Form der Ausnehmung 9 während des Beschichtungsvorgangs erzeugt werden konnte. Ebenso zu erkennen ist, dass während des Beschichtungsvorgangs selbstverständlich auch die Maskierungsstange M mit einer dünnen Schicht 61 aus Schichtmaterial belegt wurde. Diese dünne Schicht 61 wird mit der Entfernung der Maskierungsstange M nach Beendigung des Beschichtungsvorgangs automatisch mit entfernt, so dass nur die beschichtungsfreie Ausnehmung 9 verbleibt. Eventuell, falls notwendig, wird nach dem Entfernen der Maskierungsstange M die Lagerschicht 6 im Bereich der Kanten der Ausnehmung 9 noch nachbearbeitet, um z.B. geringe Beschädigungen an den Kanten, wie sie in seltenen Fällen beim Entfernen der Markierungsstangen M auftreten können, z.B. durch Polieren oder Glätten zu beseitigen.

Es versteht sich, dass die zuvor beschriebenen Ausführungsbeispiele der Erfindung, je nach Anwendung, auch in jeder geeigneten Weise kombinierbar sind und die im Rahmen dieser Anmeldung beschriebenen Ausführungsbeispiele lediglich exemplarisch zu verstehen sind. Der Fachmann versteht, dass insbesondere auch alle naheliegenden Weiterbildungen der beschriebenen Ausführungsbeispiele von der vorliegenden Erfindung abgedeckt sind.

## Patentansprüche

1. Verfahren zum Herstellen eines Lagerbauteils (1), insbesondere Pleuel (1), aus einem Formteil (2), wobei das Lagerbauteil (1) zumindest einen durch einen Lagerboden (3) und einen Lagerdeckel (4) gebildeten geteilten Lagersitz (5) umfasst, im Lagersitz (5) zur Lagerung einer Welle eine mit einer Lagerschicht (6) aus einem Lagerschichtmaterial beschichtete Lagersitzfläche (7) ausgebildet ist, und bei welchem Verfahren der Lagerdeckel (4) von dem Formteil (2) entlang einer Trennfläche (8) abgetrennt wird, **dadurch gekennzeichnet, dass** zur Bildung eines beschichtungsfreien Bereichs, ein Maskierungsmittel (M) während eines Beschichtungsvorgangs zum Aufbringen der Lagerschicht (6) derart senkrecht zu einer Trennungslinie (10) an der Lagersitzfläche (7) angeordnet wird, dass in der Lagerschicht (6) eine Ausnehmung (9) in einer vorgebbaren Breite (B) erzeugt wird.

2. Verfahren nach Anspruch 1, wobei das Maskierungsmittel (M) in Form einer Maskierungsstange (M), insbesondere in Form einer Maskierungsstange (M) mit einem runden, oder einem ovalen, oder einem mehreckigen Querschnitt, insbesondere mit einem rechteckigen oder quadratischen Querschnitt ausgebildet wird.

3. Verfahren nach einem der Ansprüche 1 oder 2, wobei zur Beschichtung mindestens zwei Lagerbauteile (1), bevorzugt zehn oder mehr Lagerbauteile (1) in Form eines Stapels (12) auf einer Halterung (13) angeordnet werden und / oder das Maskierungsmittel (M) in der Halterung (13) verankert wird.

4. Verfahren nach einem der vorangehenden Ansprüche, wobei als Maskierungsmittel (M) ein festes und / oder flüssiges und / oder gelartiges Material senkrecht zur Trennlinie (10) an der Lagersitzfläche (7) vorgesehen wird, so dass während des Beschichtungsvorgangs ein Anhaften der Lagerschicht (6) auf der Lagersitzfläche (7) im Bereich der zu bildenden Ausnehmung (9) verhindert wird.

5. Verfahren nach einem der vorangehenden Ansprüche, wobei nach dem Beschichten der Lagersitzfläche (7) mit der Lagerschicht (6) das Maskierungsmittel (M) entfernt wird, und / oder die Lagerschicht (6) an einem Rand der Ausnehmung (9) nachbearbeitet wird.

6. Verfahren nach einem der vorangehenden Ansprüche, wobei die Abtrennung des Lagerdeckels (4) vom Formteil (2) durch Bruchtrennung erfolgt.

7. Verfahren nach einem der vorangehenden Ansprüche, wobei das Formteil (2) in der Ausnehmung (9) zur Bildung der Trennfläche (8) mit einer Anrisskerbe (11) versehen wird.

8. Verfahren nach einem der vorangehenden Ansprüche, wobei vor der Beschichtung der Lagersitzfläche (7) mit der Lagerschicht (6) der Lagerdeckel (4) vom Formteil (2) abgetrennt wird, insbesondere durch Bruchtrennung abgetrennt wird, und anschliessend wieder lösbar zusammengesetzt wird.

9. Verfahren nach einem der vorangehenden Ansprüche, wobei die Lagerschicht (6) durch ein thermisches Spritzverfahren, insbesondere mittels Flammspritzen, Hochgeschwindigkeitsflammspritzen, Plasmaspritzen, oder durch ein galvanisches Verfahren oder mittels eines anderen Beschichtungsverfahrens aufgebracht wird.

10. Verfahren nach einem der vorangehenden Ansprüche, wobei das Formteil (2) durch Giessen oder Schmieden oder pulvermetallurgische Verfahren, insbesondere durch Sintern oder Sinterschmieden hergestellt wird.

11. Verfahren nach einem der vorangehenden Ansprüche, wobei die Lagerschicht (6) als Gleitlagerschicht ausgebildet wird.

12. Lagerbauteil, insbesondere Pleuel, hergestellt aus einem Formteil (2), wobei das Lagerbauteil zumindest einen durch einen Lagerboden (3) und einen Lagerdeckel (4) gebildeten, an einer Trennfläche (8) geteilten Lagersitz (5) umfasst, und im Lagersitz (5) zur Lagerung einer Welle eine mit einer Lagerschicht (6) aus einem Lagerschichtmaterial beschichtete Lagersitzfläche (7) ausgebildet ist, **dadurch gekennzeichnet dass** in der Lagerschicht (7) zur Bildung eines beschichtungsfreien Bereichs senkrecht zu einer Trennungslinie (10), eine Ausnehmung (9) in einer vorgebbaren Breite (B) vorgesehen ist.

13. Lagerbauteil nach Anspruch 11, wobei das Lagerbauteil als Pleuel mit einem geteilten Pleuelkopf ausgebildet ist.
